# FASCICULE DE BREVET EUROPEEN

(11) **EP 0 926 463 B1**
(45) Date de publication et mention de la délivrance du brevet: **02.03.2005**
(21) Numéro de dépôt: 98420216.8
(22) Date de dépôt: 27.11.1998
(51) Int. Cl.: G01B 7/004, G01N 27/90, G01N 29/00

(54) **Dispositif permettant de déterminer la position d'un ensemble mobile de sondes de mesure**
Apparat zur Feststellung der Lage einer Anordnung von mobilen Messsonden
Apparatus for determining the position of an assembly of mobile measuring probes

(30) Priorité: 10.12.1997 FR 9715902
(43) Date de publication de la demande: 30.06.1999
(73) Titulaire: Metalscan, 38000 Grenoble (FR)
(72) Inventeur: Cence, Mario, 71390 Saint Vallerin (FR)
(74) Mandataire: Bratel, Gérard

(56) Documents cités:
- EP-A- 0 155 084
- WO-A-85/00123
- DE-A- 3 031 056
- FR-A- 2 394 095
- US-A- 4 470 122
- US-A- 4 557 145
- US-A- 4 757 258
- US-A- 5 345 514

## Description

La présente invention concerne un dispositif permettant de déterminer, c'est-à-dire de relever, suivre et enregistrer, la position, l'orientation et le déplacement dans l'espace d'un ensemble mobile de sondes de mesure de valeurs physiques et/ou géométriques variables, cet ensemble mobile comportant au moins deux sondes mais étant constitué plus particulièrement par au moins une barrette de N sondes, et étant déplacé manuellement par un opérateur, relativement à une pièce ou à un objet à examiner.

Ainsi, l'invention s'applique entre autres au domaine des inspections par contact et des examens non destructifs, effectués sur des pièces et matériaux constituant, par exemple, des ensembles soudés de tous types, tels que des ensembles mécano-soudés, de formes et de géométries simples ou complexes. Plus généralement, les matériaux concernés peuvent être de toute nature : métalliques, non métalliques, composites, "sandwich"... Les liaisons peuvent aussi être de toute nature : collage, soudage, vissage, placage, dépôt soudé, etc... Les contrôles peuvent être uniques, ou répétés comme, par exemple, des examens avant et après traitement thermique, des examens avant et après réparation, des examens avant et après revêtement manuel ou automatique de composants mécano-soudés, des suivis en exploitation de matériaux ou d'assemblages, des suivis d'évolution de défauts, des contrôles industriels, des contrôles de maintenance...

Il existe déjà des systèmes permettant de relever manuellement, à l'aide de mécanismes avec moyens de mesure, la position géométrique d'une sonde ou d'un ensemble de sondes, déplacé par rapport à une pièce à contrôler.

Le contrôle est effectué manuellement, dans la plupart des cas, par un personnel qualifié qui déplace soit une sonde, soit une barrette de sondes dans un espace à trois dimensions, avec l'assistance d'un guidage et de moyens de repérage, la ou les sondes servant à relever une grandeur physique de la pièce à contrôler. Au cours de l'intervention de contrôle, lorsqu'une indication est détectée par la sonde, la position et l'orientation de cette sonde sont enregistrées. L'utilisation d'un système de recopie de position, utilisant une règle codée associée à un codage angulaire, transforme les doubles coordonnées polaires en coordonnées cartésiennes par l'intermédiaire d'un calculateur. Les caractéristiques spécifiques de la grandeur physique mesurée étant enregistrées en même temps, l'interprétation ou l'analyse des résultats est effectuée en temps réel ou en temps différé, après stockage des données acquises par tout moyen informatisé, ou par traitement électronique analogique ou numérique. Ces informations, après exploitation, permettent d'établir les caractéristiques et la localisation des défauts ou des phénomènes physiques rencontrés. Ces opérations sont longues et particulièrement pénalisantes, par exemple pour les travaux sous radiations, en milieux hostiles de façon générale, ou sur des aéronefs en maintenance pour lesquels les temps d'intervention des opérateurs sont limités et ne permettent pas les examens sur des zones de surface courbes, complexes, ou à géométrie variable.

Ces opérations manuelles nécessitent généralement des reprises de positionnement longues et fastidieuses, certaines zones devant être reprises manuellement en plusieurs fois ou avec un système de recopie classique utilisant une seule sonde.

En alternative, l'opération analogue réalisée à l'aide d'un système permettant un déplacement automatique des sondes et un enregistrement des valeurs physiques souhaitées, nécessite généralement la conception d'un appareillage spécifique pour chaque configuration géométrique, nécessaire à l'opération et tenant compte des particularités liées à chaque technique. Dans cette situation, la caractérisation de la valeur physique relevée est limitée par le fait qu'il n'est pas possible de réaliser des "balayages" sur les pièces selon les différentes orientations possibles ou nécessaires des sondes. Aussi n'arrive-t-on pas a recréer l'opération faite manuellement en présence de la valeur physique significative qui consiste à faire varier faiblement l'orientation des sondes afin d'obtenir le meilleur signal physique recherché.

Certains documents, tels que les brevets français N° 2223703 et N° 2394095, décrivent des dispositifs de repérage et de positionnement d'une sonde dans une position voulue ou le long d'un trajet voulu, ou encore un procédé et un appareillage permettant de déterminer la position d'une sonde déplacée de façon aléatoire, mais aucun de ces documents ne décrit un procédé et un appareil permettant de déterminer la position, l'orientation ou la désorientation et le déplacement d'une barrette de N sondes. Il existe des systèmes automatisés ou non pour l'examen de formes complexes mais à chaque fois ces outillages sont spécifiques à la configuration géométrique de la pièce, à laquelle s'applique l'opération. La prise en compte de l'orientation des sondes est fonction de la mécanique étudiée pour ces pièces de forme ou de révolution. L'examen de noeuds d'assemblages soudés comme par exemple les soudures des tubes de structures pétrochimiques sont des cas à chaque fois spécifiques et ces outillages ne sont pas adaptables à d'autres géométries. La mise en oeuvre de ces systèmes est souvent impossible, ou du moins non industrielle, compte tenu des inclinaisons des branchements de tubes et de la complexité des reprises de forme comme, par exemple, l'intersection de plusieurs cylindres dont les axes sont orientés différemment.

Aucun des systèmes manuels existants, qu'ils soient basés sur un repère orthonormé ou un repère transformant les coordonnées polaires en coordonnées cartésiennes, ne permet d'effectuer des cartographies avec N sondes, avec la possibilité de balayer la zone à examiner suivant des directions aléatoires, et de telle sorte que l'interprétation des enregistrements réalisés soit exploitable par corrélation des acquisitions.

Les systèmes à mécanique orthonormée, actuellement proposés, ne permettent pas de faire varier l'orientation ou la désorientation du transducteur de manière à pouvoir modifier le pas d'acquisition suivant le sens de balayage des sondes. Les procédés anciens sont limitatifs principalement lorsque la résolution de la mesure nécessite des pas d'acquisition inférieurs à la taille des sondes ou capteurs ou autres dispositifs utilisés pour l'examen des aéronefs par exemple, et plus généralement de tous composants mécaniques ou mécanico-soudés ou d'assemblages de toute nature où la résolution doit être au moins inférieure à la taille de "l'évènement" physique à déceler.

Les systèmes à laser, à caméra, à codeurs indexés et reliés ou non à des articulations, existants à ce jour, ne permettent pas de réaliser des "cartographies" avec N sondes, permettant l'enregistrement précis des acquisitions en provenance de ces sondes. L'orientation et le déplacement aléatoire non contrôlé de barrettes de N sondes ne peuvent être mis en corrélation entre eux, ni avec d'autres informations en mémoire, et être exploités de façon à les représenter rapidement, sous une forme adaptée à l'interprétation des résultats enregistrés.

La demande de brevet WO 85/00123 concerne un système de mesure de caractéristiques géométriques et électromagnétiques, sur des objets, utilisant une rangée de sondes maintenues à distance importante de ces objets, en particulier des sondes à ultrasons ou électromagnétiques. Un tel système n'est donc pas utilisé au contact des objets à analyser, et il ne peut être employé dans des zones exiguës. Dans le cas où ces sondes sont portées par un bras manipulateur (voir figure 14), il s'agit d'un robot et non d'un ensemble déplacé par un opérateur humain. Enfin, comme les précédents, ce système connu n'est pas conçu pour l'acquisition de données au cours d'un mouvement aléatoire des sondes, en tenant compte de la géométrie de l'objet analysé, précédemment mémorisée. Le document WO 85/00123 impose, au contraire, le respect de trajectoires prédéterminées.

Ainsi, en résumé, aucun des systèmes existants ne permet de prendre en compte l'orientation ou la désorientation d'une barrette de sondes.

La présente invention a donc pour but de remédier aux inconvénients et insuffisances exposés ci-dessus, en fournissant un dispositif permettant de déterminer et d'enregistrer, par rapport à des références prédéfinies, la position et l'orientation ou la désorientation d'un ensemble de N sondes notamment groupées sous forme de barrette, de manière à ce que l'ensemble des informations acquises ou pouvant être acquises et stockées, sur quelque support que ce soit, puissent être mises en relation ou en corrélation entre elles ou avec d'autres informations préalablement mémorisées, et être exploitées de façon à les représenter plus rapidement et sous une forme mieux adaptée aux exigences industrielles de l'opération, comparativement aux systèmes existants, manuels ou automatiques, ne prenant pas en compte l'orientation ou la désorientation de la barrette de sondes.

A cet effet, l'invention a essentiellement pour objet un dispositif permettant de déterminer la position d'un ensemble mobile de sondes de mesure, du genre ici concerné, dans lequel, l'ensemble mobile des sondes, porté par un mécanisme à degrés de liberté multiples, étant déplaçable manuellement par un opérateur relativement à une pièce ou un objet à contrôler, les articulations et/ou axes de mobilité de ce mécanisme sont munis de codeurs de positionnement délivrant des signaux à un calculateur ayant préalablement mémorisé des données caractérisant géométriquement la pièce où l'objet à examiner, lequel calculateur déclenche, détermine et enregistre la prise d'informations incluant la position et l'orientation de l'ensemble de sondes, en corrélation avec l'acquisition des mesures de valeurs physiques ou géométriques fournies par ces sondes.

L'invention est caractérisée en ce que la zone à examiner est divisée en n éléments de petites dimensions, de forme prédéfinie, formant un motif répétitif et définissant ainsi le maillage de cette zone, lequel est rentré dans la mémoire du calculateur. Celui-ci mémorise aussi, après acquisition, une ou plusieurs informations provenant d'une sonde simple ou multiple, qu'il attribue à la surface de l'élément au droit duquel la sonde est située à l'instant de la prise de mesure. L'élément en question peut être de toute forme géométrique, à deux ou trois dimensions, par exemple octogonal, hexagonal, carré, ou rectangulaire, choisie pour faciliter ou privilégier un maillage particulier nécessaire pour la bonne interprétation visuelle de la "cartographie". Ce maillage peut aussi augmenter ou diminuer la précision de mesure des points enregistrés, liée à la vitesse d'acquisition.

Ainsi, l'ensemble mobile de sondes notamment conformé en barrette étant porté par l'extrémité du bras d'un "manipulateur" multi-axes déplaçable par l'opérateur, des codeurs appropriés assurent un repérage des positions relatives angulaires et/ou linéaires variables des composants de ce manipulateur, quel que soit le nombre total de ses degrés de liberté, et permettent ainsi le suivi et la saisie des variations de positions, afin de calculer ou de contrôler la position, l'orientation ou la désorientation de l'ensemble mobile de sondes. Le système prend en compte, en particulier, l'orientation d'une barrette de sondes, montée rotative à l'extrémité d'un bras par au moins une articulation dont la rotation est contrôlée par au moins un codeur. Ainsi, il devient possible d'acquérir les positions individuelles de N sondes déplacées relativement à une pièce à examiner, en les mettant en corrélation avec les mesures respectivement assurées par ces N sondes, comme s'il s'agissait de relever la position d'une seule sonde. Bien entendu, la configuration spatiale des N sondes doit être initialement entrée dans la mémoire du calculateur, pour être prise en compte en combinaison avec les informations de positionnement fournies par les codeurs. Il convient aussi de tenir compte du point de fixation de l'ensemble mobile des N sondes, qui peut être situé en tout point (intermédiaire ou extrême) de la barrette, ou même déporté latéralement par rapport à l'axe de la barrette.

On réalise ainsi le contrôle de la position et de l'orientation d'une barrette comportant N sondes, relevant soit d'une seule technique de mesure, soit de plusieurs techniques, par exemple sondes à ultrasons et à courants de Foucault, utilisables notamment dans le domaine du contrôle non destructif, l'objectif étant de réaliser des "cartographies" de valeurs physiques, où l'ensemble des paramètres enregistrés sont exploitables par tout type de reconstruction visuelle, virtuelle ou autre, et sont associables à des coordonnées dimensionnelles surfaciques et volumiques.

Le dispositif objet de l'invention peut s'appliquer à des déplacements aléatoires ou non des sondes de mesure, ces déplacements s'effectuant notamment en maintenant ces sondes en contact avec la pièce ou l'objet à examiner. Avantageusement, ce dispositif est associé à des moyens d'assistance, permettant à l'opérateur d'effectuer avec l'ensemble mobile de sondes une trajectoire prédéterminée, ou non définie à l'avance mais du moins "guidée", avec un asservissement limitant les degrés de liberté selon des critères préalablement établis, ce qui facilite la réalisation de "cartographies" de surfaces complexes ou difficilement accessibles.

L'asservissement des axes mécaniques du dispositif permet aussi de réduire son inertie, de faciliter son positionnement et son application (mise en contact) pour un travail vertical ou au plafond, et de reproduire le mouvement de l'opérateur indépendamment de lui, cette dernière opération pouvant être effectuée après avoir exploité les informations acquises lors d'une première manipulation manuelle.

La mise en oeuvre de l'invention peut être encore facilitée, pour l'opérateur, par une visualisation, sur écran de moniteur, du mouvement effectué par l'ensemble mobile de sondes, ou par tout autre moyen visuel, tactile, sensitif, mécanique, audiovisuel,... pouvant guider la main de l'opérateur.

Les déplacements contrôlés de l'ensemble de sondes doivent aussi être mis en corrélation avec le pas d'acquisition des mesures, défini par ailleurs. Il s'agit, en particulier, d'éviter que soient prises en compte des mesures qui pourraient se superposer à des informations déjà enregistrées dans la zone examinée, rendant l'interprétation impossible, chaque point de mesure ne pouvant être cumulé ou confondu avec des valeurs d'un point juxtaposé. Autrement dit, les acquisitions de mesures enregistrées doivent être obligatoirement associées de manière biunivoque à une position de mesure. Il faut aussi tenir compte du fait que la résolution de prise en compte des informations de mesure est, bien entendu, liée aux tolérances du ou des degrés de liberté accordés au positionnement et à l'orientation de la barrette de N sondes, en relation avec le type et la dimension du maillage sélectionné de la zone à examiner.

Pour permettre des pas de balayage variables, ou modifiables en cours d'acquisition, les sondes peuvent être positionnées non seulement en ligne (simple barrette) mais aussi suivant toute figure géométrique en deux ou trois dimensions, notamment deux barrettes de sondes disposées parallèlement ou en croix, permettant une acquisition exploitable par relation ou corrélation des informations enregistrées. La combinaison de deux barrettes de sondes permet d'augmenter la résolution et/ou de faciliter le positionnement des sondes.

Lorsque l'opérateur manipule l'ensemble mobile de N sondes, le dispositif peut, simultanément ou non au déplacement de ces sondes, émettre des données, en réceptionner, ou émettre et réceptionner simultanément, et effectuer tout type de traitement électronique, électrique, mécanique, électromécanique ou purement mathématique des signaux spécifiques à la mesure que réalise l'opérateur. Ces signaux de mesure peuvent être saisis simultanément aux informations de position et d'orientation des N sondes, et être exploités conjointement et éventuellement en tenant compte d'autres informations conservées en mémoire, afin de présenter les résultats sous la forme la mieux adaptée à la description de la situation analysée. En réalité, le traitement, l'enregistrement et la représentation des informations peuvent, dans le cadre de la mise en oeuvre de la présente invention, se faire suivant de nombreuses formes, différentes les unes des autres.

L'invention sera mieux comprise à l'aide de la description qui suit, en référence au dessin schématique annexé représentant, à titre d'exemples, quelques formes de réalisation de ce dispositif permettant de déterminer la position d'un ensemble mobile de sondes de mesure, appliqué à un appareil d'inspection :
Figure 1 est un schéma de base du dispositif objet de l'invention ;
Figures 2, 3 et 4 montrent, sous forme de schémas de principe, trois réalisations particulières de ce dispositif ;
Figure 5 illustre un exemple de maillage ;
Figure 6 est une vue de côté, plus détaillée, d'un dispositif conforme à l'invention, en cours d'utilisation.

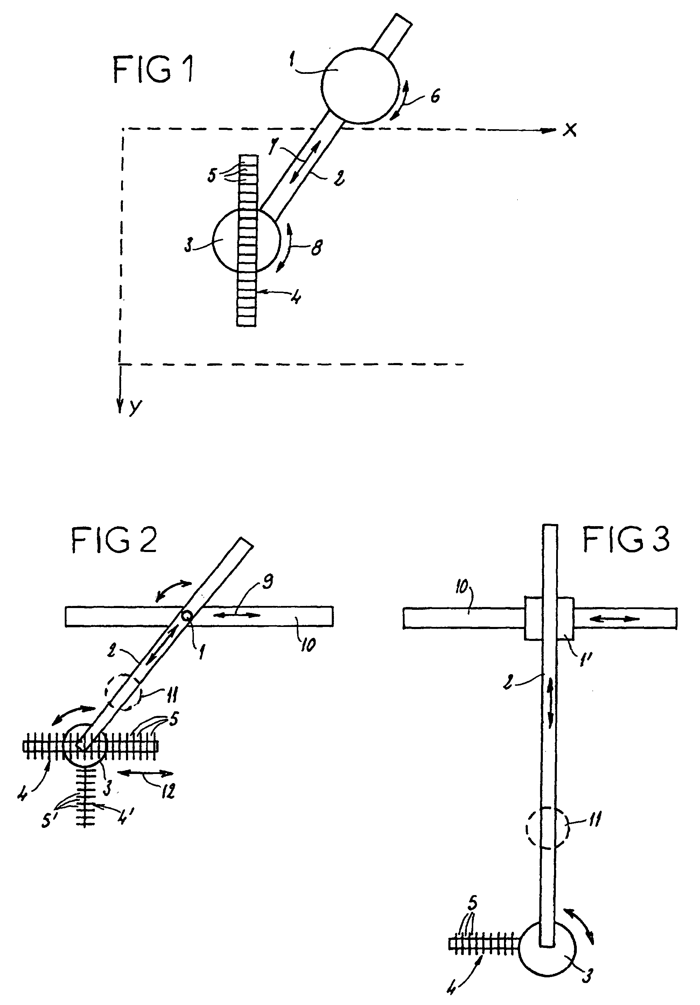

Sur la figure 1 est représenté un dispositif d'inspection comprenant un pivot ou rotule central 1, un bras radial 2 porté par le pivot 1 et, à l'extrémité du bras 2, un autre pivot ou rotule 3 portant une barrette 4 de N sondes alignées 5, telles que des sondes à ultrasons et/ou à courants de Foucault. Le bras 2 peut décrire une rotation selon la flèche 6 grâce au premier pivot 1, et une translation radiale selon la flèche 7. La barrette 4 peut décrire, grâce au pivot 3, une rotation selon la flèche 8, par rapport au bras 2, ceci sur 180°, voire 360°. Des codeurs, associés aux deux pivots 1 et 3 et au mouvement de translation du bras 2, permettent de déterminer les positions instantanées de la barrette 4 et de toutes les sondes 5, par rapport à un repère résultant de l'initialisation de ces codeurs, ou par rapport à des références fixes. Ce dispositif permet de balayer une certaine surface, l'extrémité du bras 2 étant déplacée manuellement par un opérateur, en enregistrant les informations de mesure fournies par les N sondes 5, et en associant à chaque mesure une position, c'est-à-dire les coordonnées X, Y dans l'espace ou dans un plan, du point où la mesure considérée a été faite. Ces coordonnées sont déterminées, à partir des codeurs précités, en utilisant des équations de changement de repère appropriées, le repère final étant choisi de manière à faciliter la localisation des mesures dans ou sur la pièce à contrôler. La fonction d'initialisation des codeurs permet de "caler" le repère, dans lequel les coordonnées sont déterminées, sur celui choisi comme repère final.

Les figures 2, 3 et 4 représentent des variantes du dispositif de la figure 1 :

Selon la figure 2, le dispositif comporte un premier pivot 1 non plus situé en un point fixe, mais déplaçable en translation, suivant la flèche 9, le long d'une règle-support 10. Une rotule intermédiaire 11 peut être insérée sur le bras radial 2. La barrette 4 de N sondes 5 est mobile non seulement en rotation (flèche 8), mais aussi en translation (flèche 12) par rapport à l'extrémité du bras 2. Une deuxième barrette 4' de sondes 5', perpendiculaire à la précédente, peut encore être utilisée, pour obtenir une disposition d'ensemble "en croix".

Selon la figure 3, le dispositif comporte encore une règle-support 10, mais le bras 2 s'étend perpendiculairement à la règle-support 10, et il est porté par un chariot 1' déplaçable en translation le long de cette règle-support 10. Une rotule intermédiaire 11 peut, ici aussi, être prévue sur le bras 2.

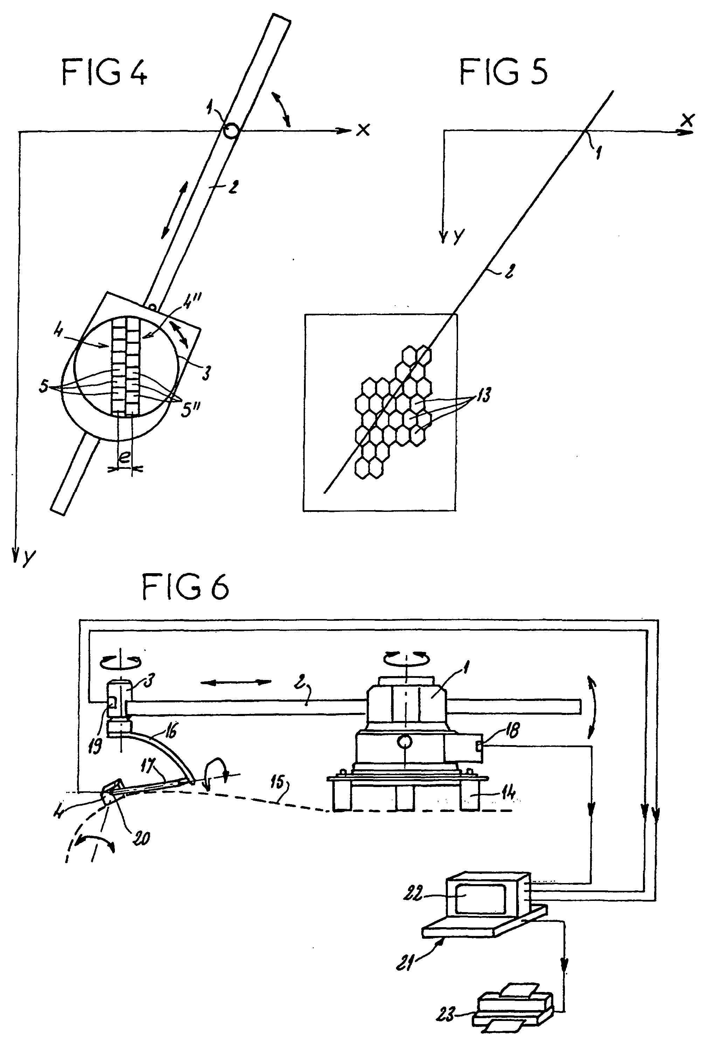

Selon la figure 4, le bras 2 porte deux barrettes 4 et 4' de N sondes, respectivement désignées 5 et 5", parallèles et accolées. L'entraxe e des deux barrettes 4 et 4" définit le pas de mesure, selon l'une des directions X et Y du plan balayé. Cette disposition permet de s'affranchir des zones "aveugles".

Les sondes 5, 5' et/ou 5", disposées sur une ligne, sont notamment des sondes à la fois émettrices et réceptrices, qu'il s'agisse de sondes à ultrasons ou de sondes à courants de Foucault.

Lors du déplacement de la barrette 4 (ou des barrettes 4, 4' ou 4, 4" selon le cas), les mesures effectuées dans un même domaine élémentaire de position sont groupées, et l'on ne conserve que la mesure la plus représentative pour chaque domaine. Pour cela, on applique à la position de chaque mesure un critère de proximité dans l'espace ou dans le plan, ce qui permet de grouper les mesures effectuées dans un même domaine. En pratique, ce critère se visualise sous la forme d'un maillage à motif répétitif, par exemple à mailles 13 hexagonales comme illustré sur la figure 5, les mailles 13 ayant un pas fixe ou variable dans les deux dimensions X et Y. La variation du pas de répétition du maillage permet, au cours du contrôle, d'adapter la précision de la représentation aux besoins, ou à la résolution offerte par les codeurs dans une zone particulière, où à la résolution résultant de l'angle de la barrette 4 de N sondes 5 avec la direction de son déplacement. La sélection de la mesure représentative de chaque maille 13 s'effectue en fonction de la méthode utilisée et du but du contrôle ; dans le cas de sondes 5 à ultrasons, par exemple, on pourra sélectionner la mesure d'amplitude maximum, ou ayant le temps de vol le plus court, ou dont le spectre est le plus énergétique dans une bande de fréquence donnée. Avec des sondes 5 à courants de Foucault, on procédera de manière similaire, sur la base de l'amplitude, de la phase, etc... On peut aussi appliquer des critères de type statistique, tels que moyenne ou histogramme, au lieu de sélectionner une seule mesure pour chaque maille 13. La sélection s'effectue soit en temps réel, au fur et à mesure que les mesures sont effectuées par les sondes 5 balayant la pièce inspectée, soit en différé, ce qui permet de modifier les critères de sélection appropriés.

Lors de l'application de ces critères, les N sondes 5 peuvent se comporter de manière totalement interchangeable, des procédés d'étalonnage et de correction étant éventuellement appliqués de manière à égaliser les réponses de ces sondes 5 avant comparaison et sélection de la mesure représentative. Mais les sondes peuvent aussi ne pas être toutes semblables, auquel cas elles sont regroupées en sous-groupes de sondes, auxquels on applique de manière indépendante le processus de sélection précédemment décrit.

Enfin, la figure 6 représente plus en détail un dispositif conforme à l'invention, en cours d'utilisation. Le dispositif possède une embase ou un support 14, fixée par ventouse, par magnétisme, par collage ou par tout autre moyen sur une pièce 15 de forme plus ou moins complexe, à examiner. On retrouve ici le premier pivot ou rotule 1, le bras 2, et l'autre pivot ou rotule 3, qui supporte ici la barrette 4 de N sondes par l'intermédiaire d'une tige courbe 16 et d'un étrier 17. L'ensemble forme un mécanisme articulé à faible inertie, ici à six degrés de liberté soit deux rotations principales et une translation pour le bras 2, et trois rotations concourantes du côté de la prise en main par l'opérateur. Cette cinématique permet de travailler avec des orientations variables de la barrette 4 de N sondes, et de balayer avec cette barrette 4 toute la surface de la pièce 15, la barrette de sondes étant déplacée en restant au contact de cette surface. Les codeurs, tels que ceux indiqués en 18, 19 et 20, associés aux différents axes de rotation et au mouvement de translation du bras 2, sont reliés à un calculateur 21 et fournissent à ce dernier des informations qui sont combinées pour calculer, par transformation de coordonnées, la position et l'orientation des N sondes 5 de la barrette 4.

L'ensemble des informations enregistrées fournies par les sondes 5, et des informations donnant la position des N sondes 5, est synchronisé, exploité et traité par le calculateur 21, qui les conserve aussi en mémoire, pour être affichées sur l'écran 22 de ce calculateur notamment sous forme de "cartographies" représentatives des zones auscultées ; les résultats peuvent aussi être retranscrits, en temps réel ou non, par un dispositif d'impression 23 raccordé au calculateur 21.

Le dispositif objet de l'invention est applicable, entre autres, à l'inspection par ultrasons et/ou courants de Foucault de joints soudés, notamment sur des pièces de formes complexes, y compris dans des zones difficiles d'accès.

L'on en s'éloignerait pas du cadre de l'invention :
- en modifiant la structure mécanique supportant l'ensemble mobile de sondes, notamment en prévoyant des articulations plus ou moins nombreuses ;
- en prévoyant pour cette structure des trajectoires de déplacement particulières, par exemple en déformant l'axe de déplacement "X" en anneau pour contrôler une pièce de révolution ;
- en réalisant les sondes sous la forme de transducteurs de tous types, selon les mesures à réaliser, les sondes pouvant être à la fois émettrices et réceptrices, ou des sondes uniquement émettrices d'une part, et des sondes uniquement réceptrices d'autre part, et ces sondes pouvant être utilisées avec ou sans contact sur la pièce à contrôler ;
- en disposant ces N sondes selon toute configuration spatiale, par exemple en quinconce ou selon une disposition en arc, voire circulaire, la disposition en ligne formant une barrette n'étant pas impérative (noter aussi que, dans le cas de sondes uniquement émettrices d'une part et uniquement réceptrices d'autre part, celles-ci peuvent être disposées respectivement suivant deux lignes parallèles, en étant liées par exemple par un support commun en "U" engagable sur la pièce à examiner) ;
- en prévoyant que la ou chaque barrette de sondes, ou son support, porte encore d'autres éléments, tels que des outils ;
- en effectuant le traitement des informations, notamment de position, selon toutes procédures ;
- en exprimant les résultats obtenus sous toutes formes.

## Revendications

1. Dispositif permettant de déterminer et d'enregistrer la position, l'orientation et le déplacement dans l'espace d'un ensemble mobile de sondes de mesure de valeurs physiques et/ou géométriques variables, cet ensemble mobile comportant au moins deux sondes mais étant constitué plus particulièrement par au moins une barrette (4) de N sondes (5), portée par un mécanisme à degrés de liberté multiples, et déplaçable manuellement par un opérateur relativement à une pièce ou un objet (15) à contrôler, les articulations (1,3) et/ou axes de mobilité de ce mécanisme étant munis de codeurs de position (18, 19, 20) délivrant des signaux à un calculateur (21) ayant préalablement mémorisé des données caractérisant géométriquement la pièce ou l'objet (15) à examiner, lequel calculateur déclenche, détermine et enregistre la prise d'informations incluant la position et l'orientation de l'ensemble (4) des sondes (5), en corrélation avec l'acquisition des mesures de valeurs physiques ou géométriques fournies par ces sondes (5), ledit dispositif étant **caractérisé en ce qu****'**il est utilisé en association avec un maillage (13) de la zone à examiner, selon un motif répétitif, les acquisitions de mesures enregistrées étant associées à ce maillage (13).

2. Dispositif selon la revendication 1, **caractérisé en ce que** l'ensemble mobile de sondes, conformé en barrette (4) de N sondes (5), est porté par l'extrémité du bras (2) d'un manipulateur multi-axes déplaçable par l'opérateur, les codeurs (18, 19, 20) assurant un repérage des positions relatives angulaires et/ou linéaires des composants de ce manipulateur.

3. Dispositif selon la revendication 2, **caractérisé en ce que** la barrette (4) de N sondes (5) est montée rotative à l'extrémité du bras (2) par au moins une articulation (3) dont la rotation est contrôlée par au moins un codeur (19, 20).

4. Dispositif selon l'une quelconque des revendications 1 à 3, **caractérisé en ce qu'**il est associé à des moyens d'assistance permettant à l'opérateur d'effectuer avec l'ensemble mobile (4) de sondes (5) une trajectoire guidée, avec un asservissement limitant les degrés de liberté.

5. Dispositif selon l'une quelconque des revendications 1 à 4, **caractérisé en ce que** l'ensemble mobile de sondes comprend deux barrettes (4, 4") de sondes (5, 5"), disposées parallèlement.

6. Dispositif selon l'une quelconque des revendications 1 à 4, **caractérisé en ce que** l'ensemble mobile de sondes comprend deux barrettes (4, 4') de sondes (5, 5'), disposées en croix.

7. Dispositif selon l'une quelconque des revendications 1 à 6, **caractérisé en ce qu'**il possède une embase ou un support (14) prévu pour être fixé sur la pièce à examiner (15).

8. Dispositif selon l'une quelconque des revendications 1 à 7, **caractérisé en ce que** les sondes (5) sont des sondes à ultrasons.

9. Dispositif selon l'une quelconque des revendications 1 à 7, **caractérisé en ce que** les sondes (5) sont des sondes à courants de Foucault.

## Patentansprüche

1. Vorrichtung zur Bestimmung und Aufzeichnung der Position, der Ausrichtung und der Verschiebung im Raum eines beweglichen Satzes von Meßsonden für variable physikalische und/oder geometrische Größen, wobei dieser bewegliche Satz mindestens zwei Sonden umfasst, aber insbesondere von mindestens einer Leiste (4) mit N Sonden (5) gebildet wird, die von einem Mechanismus mit vielfachen Freiheitsgraden getragen wird, und die von einem Operator bezüglich eines zu prüfenden Teils oder Objekts (15) manuell verschiebbar ist, wobei die Gelenkverbindungen (1, 3) und/oder Bewegungsachsen dieses Mechanismus mit Positions-Codiereinrichtungen (18, 19, 20) ausgestattet sind, die Signale an einen Rechner (21) abgeben, der zuvor Daten gespeichert hat, welche das zu prüfende Teil oder Objekt (15) geometrisch kennzeichnen, wobei dieser Rechner die Aufnahme von Informationen auslöst, bestimmt und aufzeichnet, die die Position und die Ausrichtung des Satzes (4) von Sonden (5) einschließen, in Korrelation mit der Erfassung der physikalischen oder geometrischen Messwerte, die von diesen Sonden (5) geliefert werden, wobei diese Vorrichtung **dadurch gekennzeichnet ist, dass** sie in Verbindung mit einem Netzmuster (13) des zu prüfenden Bereichs, gemäß eines sich wiederholenden Grundmotivs, verwendet wird, wobei die Erfassungen von aufgezeichneten Messwerten diesem Netzmuster (13) zugeordnet sind.

2. Vorrichtung nach Anspruch 1, **dadurch gekennzeichnet, dass** der bewegliche Sonden-Satz in Form einer Leiste (4) mit N Sonden (5) vom Ende eines Arms (2) eines Mehrachsen-Manipulators getragen wird, der vom Operator verschoben werden kann, wobei die Codiereinrichtungen (18, 19, 20) eine Bestimmung der jeweiligen Winkel- und/oder Linear-Positionen der Komponenten dieses Manipulators gewährleisten.

3. Vorrichtung nach Anspruch 2, **dadurch gekennzeichnet, dass** die Leiste (4) mit N Sonden (5) am Ende des Arms (2) mittels mindestens einer Gelenkverbindung (3) drehbar befestigt ist, deren Drehbewegung von mindestens einer Codiereinrichtung (19, 20) kontrolliert wird.

4. Vorrichtung nach einem der Ansprüche 1 bis 3, **dadurch gekennzeichnet, dass** sie mit Hilfsmitteln verbunden ist, die es dem Operator ermöglichen, mit dem beweglichen Satz (4) von Sonden (5) eine gelenkte Bahn mit einer Regelungstechnik zu beschreiben, die die Freiheitsgrade begrenzt.

5. Vorrichtung nach einem der Ansprüche 1 bis 4, **dadurch gekennzeichnet, dass** der bewegliche Sonden-Satz zwei Leisten (4, 4") mit parallel angeordneten Sonden (5, 5") umfasst.

6. Vorrichtung nach einem der Ansprüche 1 bis 4, **dadurch gekennzeichnet, dass** der bewegliche Sonden-Satz zwei Leisten (4, 4') mit kreuzweise angeordneten Sonden (5, 5') umfasst.

7. Vorrichtung nach einem der Ansprüche 1 bis 6, **dadurch gekennzeichnet, dass** sie eine Grund- oder Auflagefläche (14) hat, die für die Fixierung mit dem zu prüfenden Teil (15) vorgesehen ist.

8. Vorrichtung nach einem der Ansprüche 1 bis 7, **dadurch gekennzeichnet, dass** die Sonden (5) Ultraschall-Sonden sind.

9. Vorrichtung nach einem der Ansprüche 1 bis 7, **dadurch gekennzeichnet, dass** die Sonden (5) Wirbelstrom-Sonden sind.

## Claims

1. A device making it possible to determine and record the position, the orientation and the movement in space of a moveable set of probes for measuring variable physical and/or geometrical parameters, this moveable set comprising at least two probes but more particuiarfy consisting of at least one linear array (4) of N probes (5), carried by a mechanism which has many degrees of freedom and can be moved manually by an operator relative to a component or object (15) under inspection, the pivoting joints (1,3) and/or axes of movement of this mechanism being provided with position coders (18, 19, 20) delivering signals to a computer (21) which beforehand has stored data geometricaliy characterizing the component or object (15) under examination, which computer initiates, determines and records the taking of information, including the position and the orientation of the linear array (4) of probes (5) correlatively with the acquisition of the measurements of physical or geometrical parameters provided by these probes (5), said device being **characterized in that** it is used in association with a mesh (13) in a repeat pattern for the region under examination, the recorded measurement acquisitions being associated with this mesh (13).

2. The device as claimed in claim 1, **characterized in that** the moveable set of probes, in the form of a linear array (4) of N probes (5) is carried by the end of the arm (2) of a multi-axis manipulator which can be moved by the operator, the coders (18, 19, 20) ensuring that the angular and/or linear relative positions of the components of this manipulator are referenced.

3. The device as claimed in claim 2, **characterized in that** the linear array (4) of N probes (5) is mounted so as to rotate at the end of the arm (2) by at least one pivoting joint (3), the rotation of which is controlled by at least one coder (19,20).

4. The device as claimed in any one of claims 1 to 3, **characterized in that** it is associated with means of assistance, allowing the operator to move the moveable set of probes (5) in a guided path using a servo-control mechanism limiting the degrees of freedom.

5. The device as claimed in any one of claims 1 to 4, **characterized in that** the moveable set of probes comprises two linear arrays (4, 4") of probes (5, 5") arranged so as to be parallel to one another.

6. The device as claimed in any one of claims 1 to 4, **characterized in that** the moveable set of probes comprises two linear arrays (4,4') of probes (5,5') arranged in the form of a cross.

7. The device as claimed in any one of claims 1 to 6, **characterized in that** it has a base or a support (14) designed to be fixed to the component under examination (15).

8. The device as claimed in any one of claims 1 to 7, **characterized in that** the probes (5) are ultrasonic probes.

9. The device as claimed in any one of claims 1 to 7, **characterized in that** the probes (5) are eddy-current probes.
